# EUROPÄISCHE PATENTANMELDUNG

(11) **EP 4 538 613 A1**
(43) Veröffentlichungstag der Anmeldung: **16.04.2025**
(21) Anmeldenummer: 24204878.3
(22) Anmeldetag: 07.10.2024
(51) Int. Cl.: F24H 1/18

(54) **WÄRMESPEICHER, VERFAHREN ZUM ENTFERNEN EINER THERMISCHEN ISOLATION EINES WÄRME-SPEICHERS UND VERWENDUNG EINES TRENNELEMENTES**

(30) Priorität: 10.10.2023 DE 102023127586
(71) Anmelder: Vaillant GmbH, 42859 Remscheid NRW (DE)
(72) Erfinder: Ellinghaus, Gunnar, 42499 Hückeswagen (DE); Badenhop, Thomas, 42499 Hückeswagen (DE); Krampe-Zadler, Christof, 44628 Herne (DE); Yaman, Nazife, 50769 Köln (DE)
(74) Vertreter: Popp, Carsten

(57) **Zusammenfassung**

Vorgeschlagen wird ein Wärmespeicher (1), umfassend einen Speicherbehälter (2) zur Aufnahme eines Wärmeträgers und eine einteilige thermische Isolation (3) des Speicherbehälters (2), wobei mindestens ein Trennelement (7) in und/ oder an der thermischen Isolation (3) vorgesehen ist, das ein Ablösen der thermischen Isolation (3) vom Speicherbehälter (2) erleichtert. Zudem wird ein Verfahren zum Entfernen eine thermische Isolation (3) eines Wärmespeichers (1) und eine Verwendung eines Trennelementes (7) vorgeschlagen. Die Erfindung ermöglicht ein einfaches Ablösen der thermischen Isolation (3) vom Speicherbehälter (2) und kann somit eine Wiederverwertung eines Wärmespeichers (1) am Ende von dessen Lebenszeit erleichtern.

## Beschreibung

Die Erfindung betrifft einen Wärmespeicher, ein Verfahren zum Entfernen einer thermischen Isolation eines Wärmespeichers und eine Verwendung eines Trennelementes.

Anlagen zur Bereitstellung von Wärme für Warmwasser und/ oder Heizung können Wärmespeicher zur Speicherung von erwärmtem Wasser oder einem anderen Wärmeträger umfassen. Insbesondere bei der Nutzung erneuerbarer Energien wie Solarthermie können zu unterschiedlichen Zeitpunkten gute Bedingungen für eine Wärmegewinnung und eine Anforderung von Warmwasser vorliegen. Um hier gleichwohl die seitens eines Nutzers angeforderte Menge bzw. Temperatur mittels erneuerbarer Energien erzeugter Wärme abgeben zu können, finden Wärmespeicher Anwendung, die dazu eingerichtet sind, erwärmten Wärmeträger bis zur Nutzung zu speichern.

Derartige Wärmespeicher umfassen in der Regel einen Speicherbehälter zur Aufnahme des Wärmeträgers, der thermisch gegenüber der Umgebung isoliert ist, um Wärmeverluste zu minimieren. Eine hierzu eingesetzte Isolation sollte den Speicherbehälter möglichst dicht umschließen, um eine Bildung von Wärmebrücken und damit verbundene Wärmeverluste zu verhindern. Die Isolation wird zumeist aus bekannten Isolationsmaterialien gebildet, häufig expandierten oder geschäumten Kunststoffen.

Eine Isolation eines Wärmespeichers kann aus mehreren Teilen zusammengefügt werden. Ein Beispiel für eine derartige Isolation zeigt die DE 195 27 465 C2, bei der eine Isolation aus zwei topfförmigen Teilisolationskörpern gebildet wird, die ineinandergefügt einen geschlossenen Behälter bilden. Zudem sind andere Ausgestaltungen bekannt, beispielsweise mit einer Nut-Feder Verbindung von Teilen der Isolation, wie in der DE 10 2004 039 437 A1.

Alternativ ist eine einteilige Isolation durch Aufbringen von Isolationsmaterial direkt auf den Speicherbehälter bekannt, beispielsweise ein Einschäumen mit einem Kunststoffschaum wie Polyurethan (PUR). Vorteilhaft weisen zum Einschäumen geeignete Materialien wie PUR-Schaum eine geringere Wärmeleitfähigkeit im Vergleich zu Materialien, die für abnehmbare, mehrteilige Isolationen geeignet sind, beispielsweise expandiertes Polystyrol. Ein damit verbundenes, gegenüber einer einteiligen Isolation erhöhtes Volumen einer mehrteiligen Isolation kann bei großvolumigen Wärmespeichern aufgrund eines deutlich gesteigerten Bauraumbedarfs einen erheblichen Nachteil darstellen. Zudem kann bei einer mehreiligen Isolation die Bildung von Wärmebrücken in den Verbindungsbereichen nicht vollständig verhindert werden bzw. besteht das Risiko dies durch unsachgemäße Montage der Isolation zu begünstigen.

Ein wesentlicher Nachteil einer einteiligen Isolation besteht in einer erschwerten Demontage. So kann eine festverschäumte thermische PUR-Isolierung eines Wärmespeichers derzeit nur mit hohem Aufwand mechanisch, beispielsweise mittels Schneiden, Schaben und Abkratzen vom Speicherbehälter entfernt werden. Im Rahmen einer gewünschten Wiederverwertung der Materialien eines Wärmespeichers besteht jedoch ein Bedürfnis einer Trennung von Isolation und Speicherbehälter.

Die EP 2 865 961 A1 schlägt einen Warmwasserspeicher und ein Verfahren zu dessen Herstellung vor. Dabei wird ein Behälter des Warmwasserspeichers mit einer Beschichtung mit niedrigem Emissionsgrad für Infrarotstrahlung versehen, bevor dieser in eine Ummantelung eingesetzt wird. Ein Zwischenraum zwischen dem umhüllten Behälter und der Ummantelung zur Bildung wird mit einer Isolation ausgeschäumt. Die Beschichtung kann ein Entfernen der Isolation nicht vereinfachen.

Hiervon ausgehend ist es Aufgabe der Erfindung, einen Wärmespeicher, ein Verfahren zum Entfernen einer Isolation eines Wärmespeichers und eine Verwendung eines Trennelementes vorzuschlagen, die die geschilderten Probleme des Standes der Technik zumindest teilweise überwinden. Insbesondere soll der Wärmespeicher die Merkmale eines geringen Wärmeverlustes und Bauraumbedarfs sowie die Möglichkeit einer einfachen Trennung von Speicherbehälter und Isolation verbinden.

Diese Aufgaben werden gelöst durch die Merkmale der unabhängigen Patentansprüche. Weitere vorteilhafte Ausgestaltungen der hier vorgeschlagenen Lösung sind in den unabhängigen Patentansprüchen angegeben. Es wird darauf hingewiesen, dass die in den abhängigen Patentansprüchen aufgeführten Merkmale in beliebiger, technologisch sinnvoller, Weise miteinander kombiniert werden können und weitere Ausgestaltungen der Erfindung definieren. Darüber hinaus werden die in den Patentansprüchen angegebenen Merkmale in der Beschreibung näher präzisiert und erläutert, wobei weitere bevorzugte Ausgestaltungen der Erfindung dargestellt werden.

Hierzu trägt ein Wärmespeicher, umfassend einen Speicherbehälter zur Aufnahme eines Wärmeträgers und eine einteilige thermische Isolation des Speicherbehälters bei, bei dem mindestens ein Trennelement in und/ oder an der thermischen Isolation vorgesehen ist, das ein Ablösen der thermischen Isolation vom Speicherbehälter erleichtert, wobei das Trennelement (a.) eine elektrisch beheizbare Trennfolie umfasst, die zwischen thermischer Isolation und Speicherbehälter angeordnet ist und/ oder (b.) mindestens einen, in oder an der thermischen Isolation, angeordneten Schneiddraht umfasst.

Bei dem Wärmespeicher handelt es sich um einen Wärmespeicher zur Versorgung eines Gebäudes mit Wärme für Heizung oder Warmwasser. Insofern umfasst der Wärmespeicher einen Speicherbehälter zur Aufnahme eines (flüssigen) Wärmeträgers, beispielsweise Warmwasser oder einem anderen Wärmeträger. Insofern kann der Wärmespeicher beispielsweise als Pufferspeicher und/ oder Schichtspeicher ausgebildet sein. Er kann einen Wärmetauscher zur Übertragung eines Wärmestromes umfassen, beispielsweise zum Wärmeaustausch mit einem Heizkreis einer Heizungsanlage, einem Kältekreis einer Wärmepumpenanlage und/ oder einer anderen nachhaltigen Wärmequelle. Der Wärmetauscher kann beispielsweise als Rohrschlange ausgeführt sein, die (im montierten bzw. aufgebauten Zustand) in der Regel in einem (geodätisch) unteren Bereich des Warmwasserspeichers angeordnet sein kann.

Der Wärmespeicher umfasst eine thermische Isolation, die den Speicherbehälter insbesondere vollständig umgibt oder einhaust. Die thermische Isolation behindert den Wärmeaustausch des Speicherbehälters bzw. dessen Inhalts mit der Umgebung und kann so Wärmeverluste des Wärmespeichers mindern. Die thermische Isolation des Wärmespeichers kann insbesondere aus einem geschäumten oder expandierten Kunststoff bestehen und/oder einteilig aufgebaut sein. Die thermische Isolation kann um bzw. an den Speicherbehälter angeformt sein. Hierzu kann die thermische Isolation um den Speicherbehälter aufgebracht werden und dort erstarren. Dies kann insbesondere durch ein Um- bzw. Verschäumen des Speicherbehälters mit einem Kunststoffschaum erfolgen. Bei dem Kunststoffschaum kann es sich insbesondere um PUR- (Polyurethan-)Schaum handeln

Die Isolation kann zudem mindestens eine weitere, insbesondere feste Umhüllung, beispielsweise aus einem Kunststoff, aufweisen.

Das Trennelement kann an oder in der thermischen Isolation, insbesondere zumindest teilweise zwischen thermischer Isolation und Speicherbehälter angeordnet sein. Das Trennelement kann vollständig zwischen thermischer Isolation und Speicherbehälter aufgenommen sein und insbesondere nicht von außen "per Hand" bedient werden, wie z.B. ein Werkzeug. Das Trennelement ist also insbesondere der thermischen Isolation zugeordnet bzw. mit dieser (dauerhaft) verbunden bzw. in dieser integriert. Insbesondere wird das Trennelement bereits bei der Applikation der thermischen Isolation an den Speicherbehälter eingefügt. Es ist möglich, dass das Trennelement eine Eigenschaft der thermischen Isolation aufweist bzw. unterstützt. Das Trennelement kann an einer Vielzahl von Partitionen der thermischen Isolation und/oder an einem überwiegenden Flächenanteil der thermischen Isolation vorgesehen sein. Das Trennelement kann ein Ablösen der thermischen Isolation vom Speicherbehälter erleichtern. Mit anderen Worten kann ein Trennen der thermischen Isolation vom Speicherbehälter durch das Trennelement begünstigt bzw. ermöglicht werden.

Hierfür kann gemäß einer Ausgestaltung der mindestens eine Schneiddraht als Trennelement elektrisch beheizbar sein. Hierzu kann der mindestens eine Schneiddraht selbst aus einem elektrisch leitfähigen Material bestehen oder ein elektrisch leitfähiges Material zumindest bereichsweise enthalten. Basierend auf dem elektrischen Widerstand des elektrisch leitfähigen Materials kann ein Durchfließen mit elektrischem Strom dessen Umwandlung in Wärme hervorrufen. Die thermische Isolation kann dabei durch die einwirkende Wärme auf eine Temperatur, die eine Degradation des Materials der thermischen Isolation bewirkt, erwärmt werden.

Als thermische Degradation kann eine chemische oder mechanische Veränderung eines Materials bezeichnet werden, hervorgerufen durch Einwirkung einer spezifischen Temperatur, insbesondere innerhalb eines spezifischen Temperatur-Zeit-Limits. Eine Erhöhung der Temperatur kann zur Zunahme der Schwingungen von Atomen in einer Polymerkette führen und bei einem Erreichen einer Grenztemperatur, können die Schwingungen Bindungsbrüche und eine damit einhergehende Fragmentierung, hervorrufen. Die entstandenen Fragmente können in Folge untereinander reagieren und Reaktionsprodukte bilden oder weiter zerfallen. In Abhängigkeit der Temperatur und der chemischen Struktur des degradierenden Polymers, insbesondere Polyurethan, können verschiedenste Abbauprodukte gebildet werden. Der Degradationsprozess kann mit einer Bildung von gasförmigen, flüchtigen Verbindungen enden.

Für die thermische Degradation bzw. Zersetzung von Polyurethan wird angenommen, dass diese stark von dessen chemischer Struktur abhängt. Bei Untersuchungen der Morphologie der Polyurethane konnte gezeigt werden, dass diese Hartsegmente (hard segment) mit einer hohen (ersten) Glasübergangstemperatur (auch als Schmelztemperatur) und Weichsegmenten (soft segment) mit einer niedrigen (zweiten) Glasübergangstemperatur aufweisen. Als Glasübergangstemperatur wird hierbei die Temperatur bezeichnet, bei der ein amorphes Polymer von einem harten/glasartigen Zustand in einen weichen/lederartigen Zustand übergeht oder umgekehrt. So kann bei der thermischen Degradation von Polyurethan die chemische Struktur der zur Herstellung verwendeten Di-Isocynate und Polyole als auch deren stöchiometrisches Verhältnis eine Rolle spielen. Zudem wird der Degradationsprozess durch die Struktur des eingesetzten Chain-Extenders, der im Vernetzungsprozess eingesetzten multifunktionalen Verbindungen, das Verhältnis von Hartsegmenten zu Weichsegmenten sowie die verwendete Synthesemethode beeinflusst.

Am Beispiel von Polyurethanen als Material der thermischen Isolation ist die Degradation ein komplexer heterogener Vorgang, der aus verschiedenen einzelnen Teilprozessen besteht, die wiederum einer Vielzahl chemischer und physikalischer Reaktionen zugeschrieben werden können. Gemäß einer Idee der Erfindung kann ein Ablösen bzw. Entfernen der Isolation vom Speicherbehälter und gegebenenfalls ein Trennen einer Verbindung zwischen Speicherbehälter und thermischer Isolation erheblich vereinfacht werden, wenn die thermische Isolation auf eine Temperatur oberhalb der zweiten Glasübergangstemperatur bzw. Schmelztemperatur der Weichsegmente erwärmt wird. Es wurde festgestellt, dass oberhalb der zweiten Glasübergangstemperatur ein einfaches Ablösen bzw. Abnehmen der Isolation möglich ist.

Die zweite Glasübergangstemperatur kann hierfür als Materialkonstante gegeben sein oder in Versuchen ermittelt werden. Eine geeignete Temperatur des Trennelementes für eine Vielzahl von Isolationsmaterialien und insbesondere für Polyurethan kann in einem Bereich von 80 Grad Celsius [°C] bis 250 Grad Celsius und insbesondere von 100 Grad Celsius bis 200 Grad Celsius sein. Die Temperatur des Trennelementes sollte dabei nicht zu hoch eingestellt werden, damit eine thermische Degradation nur lokal im Bereich der Schnittstelle von Speicherbehälter und thermischer Isolation auftritt. Eine zu hohe Temperatur und damit verbundene fortgeschrittene thermische Degradation kann den Arbeitsgang des Ablösens der Isolation erheblich erschweren, da die Eigenstabilität der thermischen Isolation bzw. von abzunehmenden Segmenten derselben durch eine zu hohe Temperatur des Trennelementes versagen kann. Zudem kann eine fortgeschrittene thermische Degradation auch eine anschließende Aufarbeitung bzw. ein Recycling der Isolation erheblich erschweren.

Die Trennfolie kann zwischen Speicherbehälter und thermischer Isolation angeordnetsein. Hierfür kann die Trennfolie bei der Herstellung des Wärmespeichers vor dem Anbringen/ Aufschäumen der thermischen Isolation auf den Speicherbehälter aufgebracht werden. Das Aufbringen der Trennfolie kann dabei insbesondere vollflächig auf der Außenfläche des Speicherbehälters erfolgen, so dass die thermische Isolation den Speicherbehälter nicht direkt kontaktiert.

Das Aufbringen der Trennfolie kann mit verschiedenen bekannten Verfahren erfolgen. Beispielhaft kann das Trennelement durch Umwickeln, durch Sprühen oder Streichen oder Aufkleben auf den Speicherbehälter aufgebracht werden.

Gemäß einer Ausgestaltung kann die Trennfolie aus einem amorphen, teilkristallinen oder thermoplastischen Polymer bestehen, insbesondere Polyethylen (PE) oder Polyethylenterephthalat (PET). Alternativ oder kumulativ kann das Material der Trennfolie zumindest bereichsweise aus einem oder mehreren elektrisch leitfähigen Materialien der folgenden Gruppe ausgewählt sein:
- metallische Folien, beispielsweise aus Stahl, Eisen, Kupfer, Aluminium oder einer Legierung davon;
- elektrisch selbstleitende Polymere, beispielsweise Poly-3,4-ethylendioxythiophen (PEDOT oder PEDT), dotiertes Polyethin (auch Polyacetylen, PAC), Polyanilin (PAni), Polyparaphenylen, Polypyrrol oder dotiertes Polythiopen;
- elektrisch leitende teilkristalline Thermoplaste, beispielsweise Polyamoide (z.B. PA66 CF20, PA12 GF25 ELS, PA12 ELS), Polyoxymethylen (Polyacetal), Flüssigkristall-Polymer (Liquid Crystal Polymer (LCP)) oder Polypropylen-Copolymer;
- elektrisch leitende amorphe Thermoplaste, beispielsweise Styrol-Butadien-Kautschuk oder Styrol-Butadien-Copolymere.

Dabei sind metallische Trennfolien aufgrund ihrer Materialeigenschaften vorteilhaft elektrisch und thermisch kontaktierbar. Ausdrücklich kann die Trennfolie auch eine Kombination der vorgenannten Materialien, beispielsweise in einem mehrlagigen Aufbau aufweisen, oder es können mehrere Trennfolien gleicher oder unterschiedlicher Materialien als Trennelement in einer Schichtung übereinander vorhanden sein.

Um eine homogene Erwärmung der Trennfolie als Trennelement zu erreichen kann insbesondere auf eine homogene Schichtdicke als auch auf eine geeignete elektrische Kontaktierung geachtet werden. Die elektrische Kontaktierung kann beispielsweise in einem aufgebrachten Kontaktelement erfolgen, das eine homogene Einleitung elektrischen Stromes in die Trennfolie ermöglicht. Dabei versteht sich, dass das mindestens eine elektrische Kontaktelement zur Kontaktierung der Trennfolie mit einer Stromquelle möglichst auf einfache Weise von außen zugänglich sein sollte.

Gemäß einer Ausgestaltung kann das Trennelement ein oder mehrere Schneiddrähte umfassen, die dazu eingerichtet sind, die Isolation zu durchschneiden. Hierzu können die Schneiddrähte beim Anbringen der thermischen Isolation im Rahmen der Herstellung des Wärmespeichers, insbesondere im Bereich der Schnittstelle zwischen Speicherbehälter und thermischer Isolation, in oder an der thermischen Isolation angeordnet worden sein. Die Schneiddrähte können dabei derart angeordnet sein, dass ein Zerschneiden der thermischen Isolation in für die Demontage geeignete Segmente ermöglicht wird. Alternativ oder kumulativ kann der mindestens eine Schneiddraht dazu eingerichtet sein, die thermische Isolation im Bereich der Schnittstelle zum Speicherbehälter zu durchtrennen und so die Demontage weiter zu erleichtern.

Gemäß einer Ausgestaltung kann auch ein Schneiddraht als Trennelement dazu eingerichtet sein, mit elektrischem Strom beaufschlagt und somit erwärmt zu werden. Vorteilhaft kann mit dem erwärmten Schneiddraht ein Schneiden/ Trennen der thermischen Isolation erleichtert werden. Zur Klarstellung wird angemerkt, dass auch ein Schneiddraht als Trennelement dazu eingerichtet sein kann, auf eine Temperatur oberhalb der zweiten Glasübergangstemperatur erwärmt zu werden.

Gemäß einer Ausgestaltung können mehrere Schneiddrähte als Trennelement um den Umfang des Wärmespeichers verteilt sein, um die thermische Isolation in Segmente einer für eine Demontage geeigneten Größe zu zerteilen. Beispielsweise können die Schneiddrähte bei einem Wärmespeicher in Zylinderform die kreisförmige Grundfläche desselben und die Mantelfläche in demontierbare Kreissegmente unterteilen, beispielsweise Hälften, Viertel oder Achteln.

Ein als Trennelement geeigneter Schneiddraht kann insbesondere aus einem Metall oder einer Metalllegierung bestehen, und so vorteilhaft elektrisch und thermisch kontaktierend sein.

Dabei versteht sich, dass der mindestens eine Schneiddraht derart in oder an der thermischen Isolation angeordnet ist, dass dessen Enden von außen zugänglich sind, so dass eine Übertragung einer Zugkraft auf den mindestens einen Schneiddraht ermöglicht wird. Hierzu kann das Ende eines Schneiddrahtes als Trennelement beispielsweise eine Verdickung aufweisen.

Ausdrücklich kann ein hier vorgeschlagener Wärmespeicher auch mindestens einen Schneiddraht sowie mindestens eine Trennfolie aufweisen. So kann eine besonders einfache Demontage ermöglicht werden.

Nach einem weiteren Aspekt der Erfindung wird ein Verfahren zum Entfernen einer Isolation eines hier vorgeschlagenen Wärmespeichers vorgeschlagen, umfassend zumindest die folgenden Schritte:
a) Beaufschlagen des Trennelementes mit elektrischem Strom,
b) Entfernen der thermischen Isolation.

Das Verfahren dient insbesondere einer besonders einfachen und schnellen Demontage der Isolation bzw. einem Trennen derselben von einem Speicherbehälter des Wärmespeichers. Die Verfahrensschritte a) und b) können hierfür gleichzeitig oder in der angegebenen Reihenfolge durchgeführt werden.

Gemäß einem Schritt a) erfolgt ein Beaufschlagen des Trennelementes mit elektrischem Strom. Hierfür kann das Trennelement mit einer Stromquelle verbunden und eine geeignete (eine vorgegebene Temperatur bewirkende), vorgegebene elektrische Spannung angelegt werden. Entsprechend dem elektrischen Widerstand des Trennelementes stellt sich ein Stromfluss ein, der eine Erwärmung des Trennelementes bewirkt. Die einzustellende Spannung kann theoretisch berechnet werden oder insbesondere in Versuchen an einem Referenzwärmespeicher im Vorfeld ermittelt werden.

Gemäß einem Schritt b) kann ein Entfernen/Demontieren der thermischen Isolation erfolgen. Dies kann durch die Erwärmung der thermischen Isolation durch das Trennelement erleichtert werden. Gegebenenfalls kann während der Durchführung des Schrittes b) der Schritt a) weiter ausgeführt werden, um ein erneutes Erstarren der thermischen Isolation während der Durchführung des Schrittes b) zu verhindern.

Gemäß einer Ausgestaltung kann nach der Durchführung des Schrittes a) eine Zeitdauer gewartet werden, bevor mit der Durchführung des Schrittes b) begonnen wird, um eine für den Beginn der thermischen Degradation ausreichende Wärmeeinwirkung zu erreichen.

Gemäß einer Ausgestaltung kann die thermische Isolation des Wärmespeichers einen Polyurethanschaum mit einem Anteil Hartsegmenten, aufweisend eine erste Glasübergangstemperatur, und einem Anteil Weichsegmenten, aufweisend eine zweite Glasübergangstemperatur, umfassen und das Trennelement in Schritt a) derart mit elektrischer Energie beaufschlagt werden, dass das Trennelement auf eine Temperatur größer der zweiten Glasübergangstemperatur erhitzt wird. Hierzu kann das Trennelement in Schritt a) mit einer elektrischen Spannung beaufschlagt werden, die eine Erwärmung der thermischen Isolation an dem Trennelement auf eine Temperatur größer der zweiten Glasübergangstemperatur bewirkt. Eine zum Erreichen der zweiten Glasübergangstemperatur geeignete, anzulegende Spannung kann dabei beispielsweise im Vorfeld anhand von (Labor-)Versuchen ermittelt worden sein.

Gemäß einer Ausgestaltung kann der thermischen Isolation an dem Trennelement auf eine Temperatur größer der zweiten Glasübergangstemperatur und kleiner der der ersten Glasübergangstemperatur erwärmt werden. Dies kann die mechanische Eigenstabilität der thermischen Isolation bei der Durchführung des Schrittes b) erhalten.

Gemäß einer Ausgestaltung kann die Durchführung des Schrittes a) zyklisch erfolgen, also in einem vorgegebenen Zeitabstand wird das Trennelement für eine vorgegebene Zeitdauer mit Strom beaufschlagt. Dies kann den Zeitraum, in dem die thermische Isolation nur lokal im Kontaktbereich zum Trennelement thermisch degradiert verlängern und damit die Durchführung des Schrittes b) vereinfachen. Insbesondere kann bei dieser Ausgestaltung während der Durchführung des Schrittes b) die (zyklische) Durchführung des Schrittes b) zeitgleich erfolgen.

Nach einem weiteren Aspekt wird eine Verwendung eines Trennelementes, ), nämlich einer elektrisch beheizbaren Trennfolie und/ oder eines Schneiddrahtes, angeordnet an oder in einer Isolation eines Wärmespeichers, zum Entfernen der Isolation des Wärmespeichers vorgeschlagen. Der Warmwasserspeicher kann hierfür einen Speicherbehälter aufweisen, der von der thermischen Isolation umhaust ist und das Trennelement kann insbesondere im Bereich der Schnittstelle zwischen Speicherbehälter und thermischer Isolation angeordnet sein. Bei dem Trennelement kann es sich um eine Trennfolie und/ oder um einen Schneiddraht handeln.

Gemäß einer Ausgestaltung kann das Trennelement elektrisch beheizbar sein. Insbesondere kann das Trennelement auf eine Temperatur von mehr als 100 Grad Celsius erwärmt werden.

Die im Zusammenhang mit dem Wärmespeicher erörterten Details, Merkmale und vorteilhaften Ausgestaltungen können entsprechend auch bei dem hier vorgestellten Verfahren und und/oder der Verwendung auftreten und umgekehrt. Insoweit wird auf die dortigen Ausführungen zur näheren Charakterisierung der Merkmale vollumfänglich Bezug genommen.

Vorsorglich sei angemerkt, dass die hier verwendeten Zahlwörter ("erste", "zweite", ...) vorrangig (nur) zur Unterscheidung von mehreren gleichartigen Gegenständen, Größen oder Prozessen dienen, also insbesondere keine Abhängigkeit und/oder Reihenfolge dieser Gegenstände, Größen oder Prozesse zueinander zwingend vorgeben. Sollte eine Abhängigkeit und/oder Reihenfolge erforderlich sein, ist dies hier explizit angegeben oder es ergibt sich offensichtlich für den Fachmann beim Studium der konkret beschriebenen Ausgestaltung. Soweit ein Bauteil mehrfach vorkommen kann ("mindestens ein"), kann die Beschreibung zu einem dieser Bauteile für alle oder ein Teil der Mehrzahl dieser Bauteile gleichermaßen gelten, dies ist aber nicht zwingend.

Hier werden somit ein Wärmespeicher, ein Verfahren zum Entfernen einer Isolation eines Wärmespeichers und eine Verwendung eines Trennelementes angegeben, welche die mit Bezug auf den Stand der Technik geschilderten Probleme zumindest teilweise lösen. Insbesondere tragen der Wärmespeicher, das Verfahren sowie die Verwendung zumindest dazu bei, eine einfache Möglichkeit zum Entfernen einer thermischen Isolation von einem Wärmespeicher zu verwirklichen. Vorteilhaft ermöglicht ein einfaches Ablösen der thermischen Isolation von einem Speicherbehälter des Wärmespeichers die einzelnen Rohstoffe des Wärmespeichers getrennt einem Recycling bzw. einer Aufarbeitung zuzuführen. Die Erfindung kann dabei insbesondere die notwendige Arbeitszeit für ein Entfernen der thermischen Isolation mindern als auch ein nahezu vollständiges Ablösen der thermischen Isolation vom Speicherbehälter ermöglichen.

Die Erfindung sowie das technische Umfeld werden nachfolgend anhand der beiliegenden Figuren näher erläutert. Es ist darauf hinzuweisen, dass die Erfindung durch die angeführten Ausführungsbeispiele nicht beschränkt werden soll. Insbesondere ist es, soweit nicht explizit anders dargestellt, auch möglich, Teilaspekte der in den Figuren erläuterten Sachverhalte zu extrahieren und mit anderen Bestandteilen und Erkenntnissen aus der vorliegenden Beschreibung zu kombinieren. Insbesondere ist darauf hinzuweisen, dass die Figuren und insbesondere die dargestellten Größenverhältnisse nur schematisch sind. Es zeigt:
- Fig. 1:: einen hier vorgeschlagenen Wärmespeicher,
- Fig. 2:: eine Schnittdarstellung des Wärmespeichers, und
- Fig. 3:: eine weitere Schnittdarstellung des Wärmespeichers.

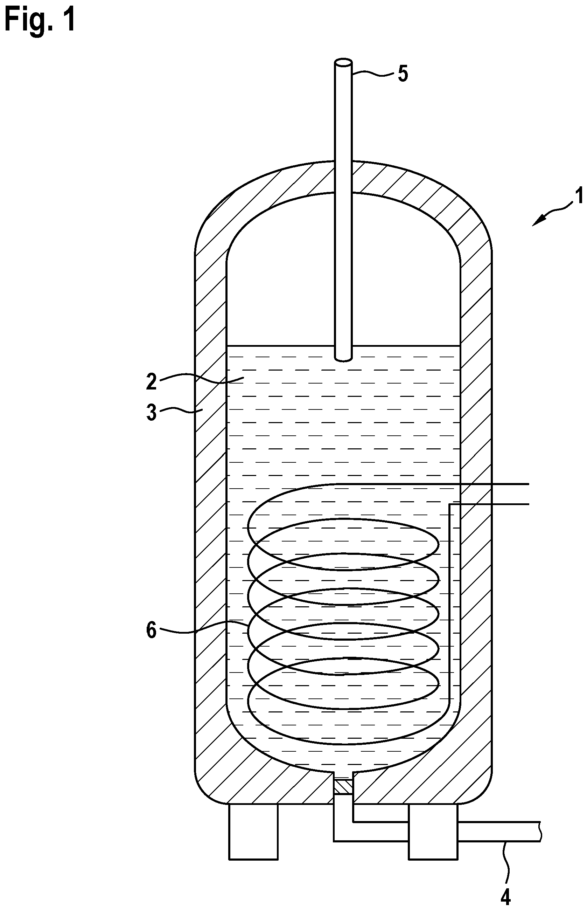

Fig. 1 zeigt beispielhaft und schematisch einen hier vorgeschlagenen Wärmespeicher 1. Dieser kann einen Speicherbehälter 2 aufweisen, der von einer thermischen Isolation 3 umschlossen wird. Die thermische Isolation 3 kann insbesondere ein Polyurethanschaum sein, der einteilig auf den Speicherbehälter 2 bzw. auf eine auf diesen aufgebrachte Trennfolie aufgebracht worden ist. Der Wärmespeicher 1 kann einen Zulauf 4 und einen Auslauf 5 umfassen. Der in Fig. 1 gezeigte Wärmespeicher 1 ist ein Warmwasserspeicher, bei dem der Zulauf 4 ein Kaltwasserzulauf und der Auslauf 5 ein Warmwasserauslauf sein kann. Zudem kann der Wärmespeicher 1 einen Wärmetauscher 6 aufweisen, der als Rohrschlange im Speicherbehälter 2 ausgebildet sein kann, und Wärmeenergie in den Speicherbehälter 2, bzw. einem darin enthaltenen Wärmeträger, eintragen oder austragen kann.

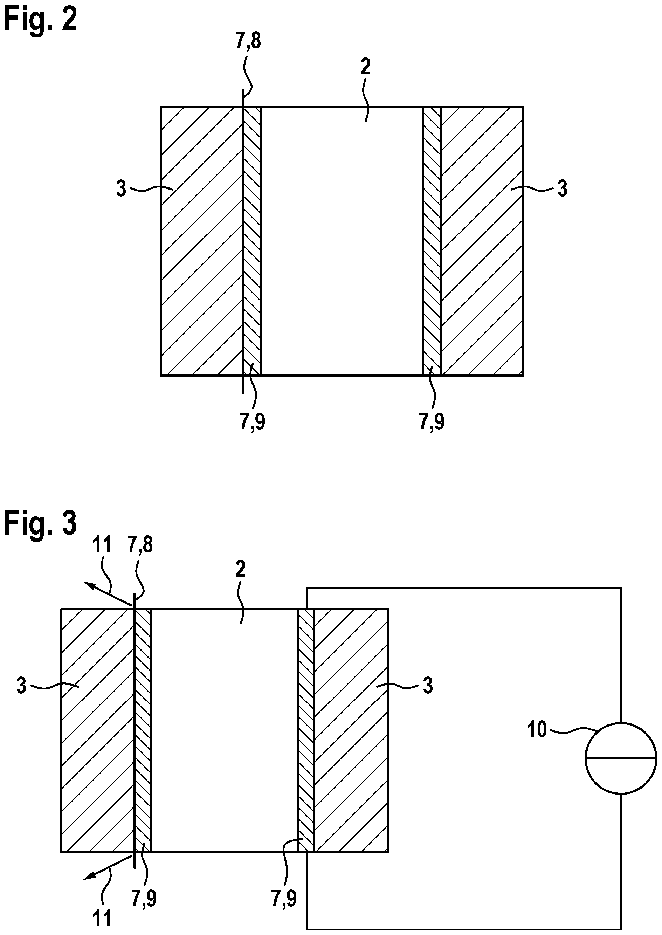

Fig. 2 zeigt beispielhaft und schematisch eine Schnittdarstellung des Wärmespeichers 1. Dabei ist zwischen der thermischen Isolation 3 und dem Speicherbehälter 2 ein Trennelement 7 ausgebildet als Trennfolie 9 angeordnet. Die Trennfolie 8 wurde bei der Herstellung des Wärmespeichers 1 vor einem Anschäumen der thermischen Isolation 3 an den Speicherbehälter 2 auf diesen vollflächig aufgebracht.

Zudem ist ein Schneiddraht 8 als Trennelement 7 vorgesehen, der in der thermischen Isolation 2 im Kontaktbereich zur Trennfolie 9 angeordnet ist und dessen Enden aus der thermischen Isolation 2 auskragen und somit von außen zugänglich sind.

Fig. 3 zeigt beispielhaft und schematisch eine weitere Schnittdarstellung des Wärmespeichers 1. Die Trennfolie 9 als Trennelement 7 ist elektrisch kontaktierend ausgebildet und somit elektrisch leitfähig. Hierfür kann die Trennfolie 9 eine metallische Trennfolie 9 sein. Mittels einer Kontaktierung der Trennfolie 9 kann diese mit einer Stromquelle 10 verbunden werden, die eine Spannung an die Trennfolie 9 anlegt. Ein daraus resultierender Stromfluss kann die Trennfolie 9 erwärmen. Bevorzugt wird die Trennfolie 9 auf eine Temperatur größer der (zweiten) Glasübergangstemperatur von Weichsegmenten des PUR-Schaumes der thermischen Isolation 3 erwärmt. Im Bereich dieser Temperatur kann die thermische Isolation 3 einfach vom Speicherbehälter 2 bzw. der Trennfolie 9 abgelöst werden.

Um das Ablösen der thermischen Isolation 3 zu erleichtern kann die einteilige thermische Isolation 3 in Segmente einer vorgegebenen Größe, die das Handling des Ablösens und eines möglichen anschließenden Transportes erleichtern, zerteilt werden. Hierfür kann der mindestens eine Schneiddraht 8 als Trennelement genutzt werden. Durch Aufbringen einer Zugkraft 11 auf die Enden des Schneiddrahtes 8 kann die thermische Isolation entsprechend segmentiert werden. Die Segmente können im Anschluss vom Speicherbehälter 2 abgenommen und einer Wiederverwertung zugeführt werden. Ein Abnehmen der Segmente vom Speicherbehälter 2 kann durch eine Trennfolie 9 erleichtert werden, insbesondere eine Trennfolie 9, die auf eine Temperatur oberhalb einer (zweiten) Glasübergangstemperatur der Weichsegmente des die thermische Isolation 3 bildenden PUR-Schaumes erwärmt wurde.

### Bezugszeichenliste

- 1: Wärmespeicher
- 2: Speicherbehälter
- 3: thermische Isolation
- 4: Zulauf
- 5: Auslauf
- 6: Wärmetauscher
- 7: Trennelement
- 8: Schneiddraht
- 9: Trennfolie
- 10: Stromquelle
- 11: Zugkraft

## Patentansprüche

1. Wärmespeicher (1), umfassend einen Speicherbehälter (2) zur Aufnahme eines Wärmeträgers und eine einteilige thermische Isolation (3) des Speicherbehälters (2), wobei mindestens ein Trennelement (7) in und/ oder an der thermischen Isolation (3) vorgesehen ist, das ein Ablösen der thermischen Isolation (3) vom Speicherbehälter (2) erleichtert wobei das Trennelement (7)
a. eine elektrisch beheizbare Trennfolie (9) ist, die zwischen thermischer Isolation (3) und Speicherbehälter (2) angeordnet ist; und/ oder
b. mindestens einen, in oder an der thermischen Isolation (3), angeordneter Schneiddraht (8) umfasst.

2. Wärmespeicher (1) nach Anspruch 1, wobei die thermische Isolation (3) zumindest teilweise aus Polyurethanschaum (PUR-Schaum) besteht.

3. Wärmespeicher (1) nach einem der vorangehenden Ansprüche, wobei der mindestens Schneiddraht (8) elektrisch beheizbar ist.

4. Wärmespeicher (1) nach einem der vorangehenden Ansprüche, wobei die Trennfolie (9) aus einem amorphen, teilkristallinen oder thermoplastischen Polymer besteht.

5. Wärmespeicher (1) nach einem der vorangehenden Ansprüche, wobei das Trennelement (7) ein oder mehrere Schneiddrähte (8) umfasst, die dazu angeordnet und eingerichtet sind, die thermische Isolation (3) in Segmente mit einer vorgegebenen Größe zu durchschneiden.

6. Verfahren zum Entfernen einer thermischen Isolation (3) eines Wärmespeichers (1) nach einem der vorangehenden Ansprüche, umfassend zumindest die folgenden Schritte:
a) Beaufschlagen des Trennelementes (7) mit elektrischem Strom,
b) Entfernen der thermischen Isolation (3).

7. Verfahren nach Anspruch 6, wobei die thermische Isolation (3) des Wärmespeichers (1) einen Polyurethanschaum mit einem ersten Anteil Hartsegmenten, aufweisend eine erste Glasübergangstemperatur, und einem zweiten Anteil Weichsegmenten, aufweisend eine zweite Glasübergangstemperatur, umfasst und das Trennelement (7) in Schritt a) derart mit elektrischer Energie beaufschlagt wird, dass das Trennelement (7) auf eine Temperatur größer der zweiten Glasübergangstemperatur erhitzt wird.

8. Verfahren nach Anspruch 7, wobei das Trennelement (7) in Schritt a) derart mit elektrischer Energie beaufschlagt wird, dass das Trennelement (7) auf eine Temperatur größer der zweiten Glasübergangstemperatur und kleiner der ersten Glasübergangstemperatur erhitzt wird.

9. Verwendung eines Trennelementes (7), nämlich einer elektrisch beheizbaren Trennfolie (9) und/ oder eines Schneiddrahtes (8) angeordnet an oder in einer thermischen Isolation (3) eines Wärmespeichers (1), zum Entfernen der thermischen Isolation (3) des Wärmespeichers (1).
